# EUROPÄISCHE PATENTSCHRIFT

(11) **EP 3 596 239 B1**
(45) Veröffentlichungstag und Bekanntmachung des Hinweises auf die Patenterteilung: **25.01.2023**
(21) Anmeldenummer: 18712186.8
(22) Anmeldetag: 16.03.2018
(51) Int. Cl.: H01F 1/18, B05D 7/00, B05D 5/10, B05D 5/12, B05D 1/28, B05D 3/02, C21D 8/12

(54) **VERFAHREN ZUR HERSTELLUNG VON LACKBESCHICHTETEN ELEKTROBLECHBÄNDERN UND LACKBESCHICHTETES ELEKTROBLECHBAND**
PROCESS FOR MANUFACTURING PAINT-COATED ELECTRIC STRIP STEEL, AND PAINT-COATED ELECTRIC STEEL STRIP
PROCÉDÉ POUR PRODUIRE DES BANDES DE TÔLES ÉLECTROMAGNÉTIQUES REVÊTUES DE PEINTURE ET BANDE DE TÔLES ÉLECTROMAGNÉTIQUES REVÊTUE DE PEINTURE

(30) Priorität: 17.03.2017 DE 102017204522
(43) Veröffentlichungstag der Anmeldung: 22.01.2020
(73) Patentinhaber: voestalpine Stahl GmbH, 4020 Linz (AT)
(72) Erfinder: FLUCH, Ronald, 4020 Linz (AT); KEPPERT, Timothy, 4020 Linz (AT)
(74) Vertreter: Lambsdorff & Lange Patentanwälte Partnerschaft mbB
(86) Internationale Anmeldenummer: PCT/EP2018/056734
(87) Internationale Veröffentlichungsnummer: WO 2018/167296

(56) Entgegenhaltungen:
- EP-A1- 3 060 031
- DE-A1- 3 244 823
- JP-A- S6 335 746

## Beschreibung

Die Erfindung betrifft ein Verfahren zur Herstellung eines lackbeschichteten Elektroblechbandes sowie ein lackbeschichtetes Elektroblechband.

Elektrobleche kommen in der Elektroindustrie beim Bau von Generatoren, Elektromotoren, Transformatoren sowie anderen elektrischen Maschinen zum Einsatz. Je nach Anwendung werden Elektrobleche unterschiedlicher Stahllegierungen, weichmagnetischer Eigenschaften, Verlustleistungen, Dicken und anderer je nach Einsatzgebiet wichtigen Eigenschaften gewählt.

Elektrobleche werden aus einem Elektroblechband (in der Technik häufig auch als Elektroband bezeichnet) durch Querteilen und Zuschneiden desselben hergestellt. Die Elektrobleche bilden das Ausgangsmaterial für magnetische Kerne (sogenannte Elektrokerne) der elektrischen Maschinen, in welchen sie zum Einsatz kommen. Die Elektrokerne werden aus elektrisch voneinander isolierten, geschichteten Elektroblechen aufgebaut. Hierfür werden elektrisch isolierte Elektrobleche durch Stanzen oder Schneiden in ihre Endform gebracht, zu einem Elektrokern (Blechpaket) gestapelt und anschließend miteinander verklebt (verbacken). Durch den Schichtaufbau wird das Auftreten von Wirbelströmen im Elektrokern weitgehend unterbunden, wodurch sich der Wirkungsgrad des Elektrokerns deutlich erhöht.

Es ist bereits bekannt, die Elektrobleche mit einer klebefähigen Isolierlackschicht zu überziehen, die eine Verklebung der Elektrobleche im Blechstapel ermöglicht und außerdem die elektrische Isolation zwischen den Elektroblechen bewirkt. Um eine ausreichende elektrische Isolationssicherheit über die Lebensdauer des Elektrokerns zu gewährleisten, muss die klebefähige Isolierlackschicht allerdings eine gewisse minimale Dicke aufweisen. Auf der anderen Seite führt eine unter Isolationsgesichtspunkten vorteilhafte Erhöhung der Schichtdicke der Isolierlackschicht zu einer Verschlechterung des Stapelfaktors, der für die Erzielung eines hohen Wirkungsgrades so groß wie möglich sein sollte. Ferner kann eine zu hohe Schichtdicke der Isolierlackschicht zu einer nicht ausreichenden Langzeit-Formstabilität eines Elektrokerns im Betrieb (d.h. dem Nichtbestehen des Setzungstests) führen.

Aus der Schrift US 2012/0064316 A1 ist es bereits bekannt, ein kontinuierliches Metallsubstrat mit einer Korrosionsschutzschicht zu beschichten, die aus einer unteren Schicht, einer oberen Schicht und einer zwischen den beiden Schichten auftretenden Diffusionsschicht besteht. Dabei wird die obere Schicht über die noch nasse untere Schicht aufgebracht, wodurch sich die Diffusionsschicht zwischen den beiden Schichten ausbilden kann.

DE 32 44 823 A1 beschreibt ein Elektroblech mit einer Isolierschicht auf der einen Seite und einer aushärtbaren Klebstoffschicht auf der anderen Seite.

EP 3 060 031 A1 beschreibt als nächstliegender Stand der Tecnik ein Coil-Coating-Verfahren, bei dem ein Elektroblech zunächst mit einer ersten nassen Isolierlackschicht beschichtet wird, welche anschließend getrocknet wird. Anschließend wird eine funktionale Leiterbahn nass aufgedruckt und eine zweite Isolierlackschicht auf die noch nasse Leiterbahn aufgetragen.

JP S63 35746 A beschreibt eine beidseitige Rollenapplikation einer einzigen Isolierlackschicht auf ein Elektroband.

Eine der Erfindung zugrunde liegende Aufgabenstellung kann darin gesehen werden, ein Verfahren zur Herstellung eines lackbeschichteten Elektroblechbandes anzugeben, das eine einfache und kostengünstige Herstellung eines für den Aufbau von leistungsfähigen und langlebigen Elektrokernen geeigneten Elektroblechbandes ermöglicht. Ferner zielt die Erfindung darauf ab, ein Elektroblechband mit den genannten Eigenschaften zu schaffen.

Die Aufgabenstellung wird durch die Merkmale der unabhängigen Ansprüche gelöst. Ausführungsformen und Weiterbildungen sind Gegenstand der Unteransprüche.

Demnach umfasst ein Verfahren zur Herstellung eines lackbeschichteten Elektroblechbandes die nasse Aufbringung einer ersten (elektrischen) Isolierlackschicht über zumindest eine Seite des Elektroblechbandes, die nasse Aufbringung einer zweiten (elektrischen) Isolierlackschicht über die nasse erste Isolierlackschicht durch Rollenapplikation, und die Trocknung der ersten Isolierlackschicht und der zweiten Isolierlackschicht in einem Trockenofen.

Zum einen basieren Ausführungsformen der Erfindung auf der Idee, einen Mehrschichtaufbau am (kontinuierlichen) Elektroblechband durchzuführen. Der Mehrschichtaufbau ermöglicht es, das Elektroblechband gezielt mit einer für die elektrische Isolation optimierten ersten Isolierlackschicht und einer für die spätere Verklebung der Elektrobleche optimierten klebefähigen zweiten Isolierlackschicht zu beschichten.

Ferner basieren Ausführungsformen der Erfindung auf der Idee, eine nasse Aufbringung der zweiten Isolierlackschicht über der noch nassen ersten Isolierlackschicht vorzunehmen (sogenannte Nass-in-Nass-Aufbringung) und die Trocknung der aufgebrachten Schichten in einem gemeinsamen Trocknungsprozess vorzunehmen. Die Nass-in-Nass-Aufbringung der zweiten Isolierlackschicht über der ersten Isolierlackschicht und die nachfolgende gemeinsame Trocknung der beiden Schichten ermöglicht eine besonders wirtschaftliche Herstellung des lackbeschichteten Elektroblechbandes.

Die Herstellung des Mehrschichtensystems kann in einem (einzigen) Inline-Prozess durchgeführt werden. Insbesondere wurde erkannt, dass die Nass-in-Nass-Aufbringung der beiden Schichten auch bei relativ geringen Schichtdicken möglich ist, ohne die Klebeeigenschaften der oberen zweiten Isolierlackschicht zu beeinträchtigen.

Mit anderen Worten kann erreicht werden, dass die obere zweiten Isolierlackschicht mit einer Rollenapplikation - d.h. einer nicht berührungsfreien Aufbringungsmethode - aufgetragen wird und dennoch ihre volle Funktionsfähigkeit beibehält. Die Rollenapplikation ist eine besonders kosteneffiziente Aufbringungsmethode.

Gemäß einer Ausführungsform kann die nasse Aufbringung der ersten Isolierlackschicht, die nasse Aufbringung der zweiten Isolierlackschicht und die Trocknung der ersten Isolierlackschicht und der zweiten Isolierlackschicht (sowie gegebenenfalls weiterer Schichten) im kontinuierlichen Bandlauf, d.h. beispielsweise in derselben Bandbeschichtungsanlage und/oder ohne eine Zwischenaufwicklung auf ein Coil und/oder ohne Querteilung durchgeführt werden. In diesem Fall können die einzelnen Verfahrensschritte (Nass-in-Nass-Aufbringung und Trocknung) in unmittelbarer zeitlicher und räumlicher Nähe zueinander durchgeführt werden. Insbesondere kann der Mehrschichtaufbau ohne Zwischentrocknung der zuvor aufgebrachten Schichten (bei einem Zwei-Schichtaufbau ohne Trocknung der ersten Isolierlackschicht vor dem nassen Aufbringen der zweiten Isolierlackschicht) durchgeführt werden.

Beispielsweise kann eine Zeitdauer zwischen der nassen Aufbringung der ersten Isolierlackschicht und der nassen Aufbringung der zweiten Isolierlackschicht gleich oder kleiner als 20 s, insbesondere 15 s, 10 s oder 5 s sein.

Die Trocknung des beschichteten Elektroblechbandes kann ebenfalls in kurzer zeitlicher Abfolge nach der Nass-in-Nass-Beschichtung erfolgen. Beispielsweise kann eine Zeitdauer zwischen der nassen Aufbringung der zweiten Isolierlackschicht und dem Beginn der Trocknung gleich oder kleiner als 20 s, insbesondere 15 s, 10 s oder 5 s sein.

Die maximale Blechtemperatur im Trockenofen kann beispielsweise zwischen 150°C und 280°C, insbesondere zwischen 170°C, 180°C, 190°C oder 200°C als untere Temperaturgrenze und/oder beispielsweise 250°C, 220°C, 210°C oder 200°C als obere Temperaturgrenze betragen. Dadurch lässt sich erreichen, dass die Schichten ausreichend verfestigt werden, so dass sie beispielsweise nicht an den Bandlaufrollen hinter dem Trockenofen (z.B. Durchlauftrockenofen) kleben bleiben. Auf der anderen Seite ermöglichen nicht zu hohe Temperaturen, dass die zweite Isolierlackschicht für den späteren Klebeprozess im geschichteten Elektrokern funktionsfähig bleibt.

Beispielsweise können geringe Schichtdicken zwischen 1 µm und 12 µm, insbesondere zwischen 4 µm und 10 µm und/oder gleich oder kleiner als 6 µm, 8 µm oder 10 µm der getrockneten ersten Isolierlackschicht und/oder der getrockneten zweiten Isolierlackschicht erzielt werden. Je geringer die Schichtdicke, desto größer kann der Stapelfaktor des Elektrokerns eingestellt werden und desto günstigere Voraussetzungen liegen für das Bestehen des Setzungstests vor.

Eine geringe Beeinflussung der Eigenschaften der zweiten Isolierlackschicht durch die darunterliegende Schicht (z.B. erste Isolierlackschicht) kann beispielsweise dadurch gefördert werden, dass die Viskosität der ersten Isolierlackschicht direkt nach Ihrer nassen Aufbringung größer ist als die Viskosität der zweiten Isolierlackschicht direkt nach Ihrer nassen Aufbringung.

Die nasse Aufbringung der ersten Isolierlackschicht kann ebenfalls durch eine Rollenapplikation erfolgen. Eine Rollenapplikation ermöglicht eine kosteneffiziente Schichtauftragung bei guter Einstellbarkeit der Schichtdicke.

Die Rolle für die nasse Aufbringung der zweiten Isolierlackschicht kann in Bandlaufrichtung drehen, wodurch eine schonende Aufbringung des zweiten Isolierlacks über die darunterliegende (nasse) erste Isolierlackschicht ermöglicht wird. Insbesondere kann die Rollengeschwindigkeit höher als die Bandgeschwindigkeit sein, wodurch eine sehr geringe Scherverfestigung der zweiten Isolierlackschicht und/oder eine geringe mechanische Beeinflussung der darunterliegenden ersten Isolierlackschicht durch die Rolle erreicht werden kann.

Ein lackbeschichtetes Elektroblechband weist ein Elektroblechband, eine trockene erste Isolierlackschicht über zumindest einer Seite des Elektroblechbandes und eine trockene zweite Isolierlackschicht über der trockenen ersten Isolierlackschicht, die nass über der noch nassen ersten Isolierlackschicht aufgetragen und dann zusammen mit der nassen ersten Isolierlackschicht getrocknet wurde, auf. Ein solches lackbeschichtetes Elektroblechband weist hohe elektrische Isolationseigenschaften und eine gute Verklebbarkeit im späteren Herstellungsprozess des Elektrokerns auf. Ferner kann es kostengünstig und mit geringen Schichtdicken produziert werden.

Die trockene erste Isolierlackschicht kann eine formaldehydfreie Lackschicht, insbesondere eine formaldehydfreie C6-Lackschicht sein.

Die trockene zweite Isolierlackschicht kann eine Epoxidharz-basierte Schicht und/oder eine Backlack-Schicht, insbesondere eine Epoxidharz-basierte Backlack-Schicht sein.

Das lackbeschichtete Elektroblechband kann einseitig oder beidseitig beschichtet sein. Beispielsweise kann das lackbeschichtete Elektroblechband über der der beschichteten Seite gegenüberliegenden Seite eine weitere trockene erste Isolierlackschicht und eine weitere trockene zweite Isolierlackschicht über der weiteren trockenen ersten Isolierlackschicht aufweisen, wobei die weitere trockene zweite Isolierlackschicht nass über der noch nassen weiteren ersten Isolierlackschicht aufgetragen und dann zusammen mit der nassen weiteren ersten Isolierlackschicht getrocknet wurde.

Das lackbeschichtete Elektroblechband kann (nach der Trocknung) zu einem Coil (Wickel) aufgewickelt werden. Das Coil kann beispielsweise z.B. zu einem Kunden transportiert und dort in einzelne Elektrobleche quergeteilt und zugeschnitten werden. Eine andere Möglichkeit besteht darin, die Querteilung bereits im kontinuierlichen Bandlauf hinter der Trocknung vorzunehmen und die einzelnen Elektrobleche dann an ihren Bestimmungsort (z.B. zum Kunden) zu transportieren und dort zuzuschneiden.

Nachfolgend werden Ausführungsformen und Weiterbildungen in beispielhafter Weise anhand der schematischen Zeichnungen erläutert, wobei in den Zeichnungen teilweise ein unterschiedlicher Detaillierungsgrad verwendet wird. Die Zeichnungen sind nicht maßstabsgetreu. Gleiche Bezugszeichen bezeichnen dieselben oder ähnlich Teile.
- Figur 1: zeigt in Längsschnittdarstellung einen beispielhaften Prozess des Aufbringens einer ersten (elektrischen) Isolierlackschicht und einer zweiten Isolierlackschicht auf ein Elektroblechband sowie eine Trocknung der Schichten in einem Trockenofen.
- Figur 2: zeigt in Längsschnittdarstellung beispielhaft einen oberflächennahen Ausschnitt aus einem Elektroblechband nach der Schichttrocknung, welches mit einer nassen ersten Isolierlackschicht und einer darüber liegenden nassen zweiten Isolierlackschicht beschichtet wurde.
- Figur 3: zeigt ein Coil aus einem lackbeschichteten Elektroblechband gemäß einer Ausführungsform der Erfindung.
- Figur 4: zeigt einen Elektroblechstapel, der aus übereinander geschichteten, beschichteten Elektroblechen aufgebaut ist.
- Figur 5: veranschaulicht in beispielhafter Weise den Verlauf der Auseinanderreißkraft (in N/mm) gegenüber dem Schälweg (in mm) bei einer Probe, die aus zwei verklebten Elektroblechstreifen besteht.

Begriffe wie "Aufbringen" oder "Auftragen" sowie ähnliche Begriffe (z.B. "aufgebracht" bzw. "aufgetragen") sind in dieser Beschreibung nicht so zu verstehen, dass die aufgebrachten bzw. aufgetragenen Schichten einen direkten Kontakt zu der Oberfläche, auf der sie aufgebracht bzw. aufgetragen werden, aufweisen müssen. Es können dazwischenliegende Schichten zwischen den "aufgebrachten" oder "aufgetragenen" Schichten und der darunterliegenden Oberfläche vorhanden sein. Jedoch können die oben erwähnten oder ähnliche Begriffe in dieser Offenbarung auch die spezielle Bedeutung haben, dass die Schichten einen direkten Kontakt zu der darunterliegenden Oberfläche haben, d.h. dass keine dazwischenliegenden Schichten vorhanden sind.

Der Begriff "über", der in Bezug auf ein Element oder eine Materialschicht verwendet wird, das oder die "über" einer Oberfläche gebildet oder angebracht wird, kann hier in der Bedeutung verwendet werden, dass das Element oder die Materialschicht "indirekt auf" der Oberfläche angebracht wird, wobei zwischenliegende Elemente oder Schichten zwischen der Oberfläche und dem Element oder der Materialschicht vorhanden sein können. Jedoch kann der Begriff "über" auch die spezielle Bedeutung haben, dass das Element oder die Materialschicht, die "über" einer Oberfläche aufgebracht oder aufgetragen wird, "direkt auf", d.h. z.B. in direktem Kontakt mit der betreffenden Oberfläche angebracht wird. Das Gleiche gilt analog für ähnliche Begriffe wie "oberhalb", "unter", "unterhalb" usw.

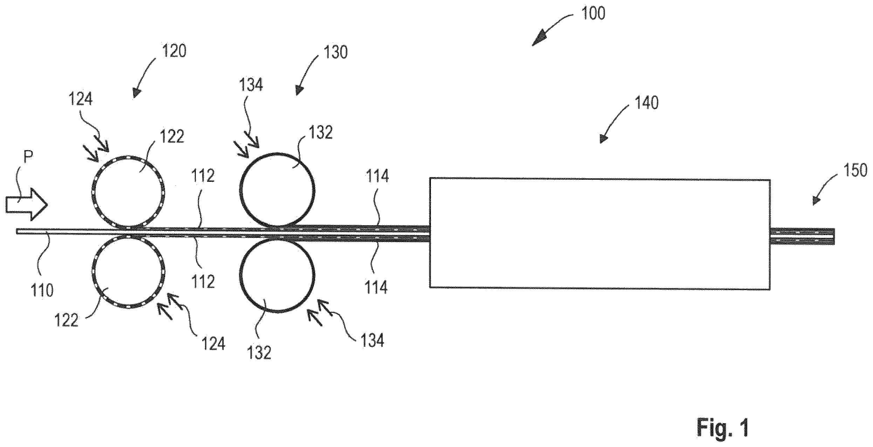

Figur 1 veranschaulicht einen beispielhaften Bandlauf eines Elektroblechbandes 110 in einer Bandbeschichtungsanlage 100. Ein Elektroblechband 110 wird der Bandbeschichtungsanlage 100 im kontinuierlichen Bandlauf (siehe Pfeil P) zugeführt. Bei dem Elektroblechband 110 kann es sich beispielsweise um ein kaltgewalztes, nicht kornorientiertes Elektroblech im schlussgeglühten Zustand handeln (z.B. DIN EN 10106). Andere Elektrobleche, beispielsweise nicht-schlussgeglühte Elektrobleche usw., sind ebenfalls möglich. Kaltgewalzte oder warmgewalzte Elektrobleche werden beispielsweise als Polbleche in Erregermaschinen oder Generatoren eingesetzt.

Das der Bandbeschichtungsanlage 100 zugeführte Elektroblechband 110 kann beispielsweise in Form eines "endlosen" Metallbandes vorliegen, das gegebenenfalls von einem Coil (nicht dargestellt) in Pfeilrichtung P abgewickelt wird.

Die Bandbeschichtungsanlage 100 umfasst zumindest eine erste Beschichtungsstation 120, eine zweite Beschichtungsstation 130 und einen Trockenofen 140, beispielsweise einen Trockeneinbrennofen.

Die Beschichtungsanlage 100 ist in dem hier dargestellten Beispiel als beidseitige Beschichtungsanlage 100 dargestellt. Es ist jedoch auch möglich, dass lediglich eine Seite des Elektroblechbandes 110 (beispielsweise die in Figur 1 dargestellte Oberseite) beschichtet und getrocknet wird. Insofern gelten sämtliche Ausführungen im Folgenden sowohl für den Fall einer einseitigen Beschichtung als auch für die dargestellte Möglichkeit, das Elektroblechband 110 auf beiden Seiten zu beschichten. Im zweiten Fall (beidseitige Beschichtung) können sämtliche Angaben zur Beschichtung und Trocknung sowohl für die Prozessierung der Bandoberseite als auch für die Prozessierung der gegenüberliegenden Bandunterseite des Elektroblechbandes 110 gelten. Ferner kann auch eine beidseitige Beschichtung mit unterschiedlichen Schichten auf den beiden Bandseiten vorgenommen werden, wie im Folgenden noch angesprochen.

Das unbeschichtete oder gegebenenfalls durch eine Grundierung (nicht dargestellt) schon vorbeschichtete Elektroblechband 110 wird in der ersten Beschichtungsstation 120 mit einer nassen ersten Isolierlackschicht 112 beschichtet. Die Beschichtung kann vollflächig erfolgen, d.h. die Oberfläche des Elektroblechbandes 110 vollständig abdecken.

Die nasse erste Isolierlackschicht 112 kann durch eine Rolle bzw. Walze 122 (bzw. ein Rollen- oder Walzenpaar 122) auf die obere Flachseite (bzw. auch auf die gegenüberliegende untere Flachseite) des Elektroblechbandes 110 aufgetragen werden. Bei einer Rollenapplikation der nassen ersten Isolierlackschicht 112 läuft die Rolle 122 auf dem sich bewegenden Elektroblechband 110 ab und lagert dabei flüssigen Isolierlack 124, der zuvor auf die Rolle 122 aufgetragen wurde, auf der Oberfläche des Elektroblechbandes 110 ab. Dabei lässt sich sowohl die Schichtdicke als auch die Viskosität der ersten Isolierlackschicht 112 durch die Parameter der Rollenapplikation einstellen.

Nach der Aufbringung der (nassen) ersten Isolierlackschicht 112 auf eine oder beide Seiten des Elektroblechbandes 110 läuft das nassbeschichtete Elektroblechband 110 durch die zweite Beschichtungsstation 130. In der zweiten Beschichtungsstation 130 wird durch eine Rolle 132 (bzw. ein Rollenpaar 132) eine nasse zweite Isolierlackschicht auf die nasse erste Isolierlackschicht 112 aufgebracht. Die Aufbringung erfolgt durch Rollenapplikation, wobei wiederum die Viskosität der (nassen) zweiten Isolierlackschicht 114 sowie ihre Schichtdicke (gemessen nach der Trocknung) durch Parameter der Rollenapplikation einstellbar sind. Auch diese Beschichtung kann vollflächig erfolgen, d.h. die Oberfläche der nassen ersten Isolierlackschicht 112 vollständig abdecken.

Bei der beidseitig unterschiedlichen Beschichtung kann beispielsweise auf der Unterseite des Elektroblechbandes 110 lediglich die erste Isolierlackschicht 112 oder lediglich die zweite Isolierlackschicht 114 aufgebracht werden. Es kann also beispielsweise entweder beim Rollenpaar 122 oder beim Rollenpaar 132 nur eine der beiden Rollen zur Lackaufbringung ausgelegt sein.

Bei dem zweiten Isolierlack 134 handelt es sich um einen klebefähigen Isolierlack, beispielsweise um einen Klebstofflack. Der zweite Isolierlack 134 wird der Rolle 132 über ein geeignetes Zuführsystem (nicht näher dargestellt) zugeleitet. Beispielsweise kann dieselbe Menge an zweitem Isolierlack 134, die zur Ausbildung der nassen zweiten Isolierlackschicht 114 auf dem Elektroblechband 110 abgelagert wird, der Rolle 132 als Frischlack (z.B. Klebstofflack) zugeführt werden.

Zwischen der ersten Beschichtungsstation 120 und der zweiten Beschichtungsstation 130 erfolgt keine (signifikante) Zwischentrocknung des mit der nassen ersten Isolierlackschicht 112 beschichteten Elektroblechbandes 110. Das heißt, die erste Isolierlackschicht 112 ist beim Eintritt in die zweite Beschichtungsstation 130 und beim Aufbringen des zweiten Isolierlacks 134 noch nass. Beispielsweise weist die Beschichtungsanlage 100 keine Trockeneinrichtung (z.B. Ofen, Bestrahlunsgeinrichtung, etc.) zwischen der ersten Beschichtungsstation 120 und der zweiten Beschichtungsstation 130 auf, die eine An- und/oder Durchtrocknung der ersten Isolierlackschicht 112 herbeiführen würde.

Die erste Beschichtungsstation 120 und die zweite Beschichtungsstation 130 können räumlich und - bezogen auf die Bandlaufgeschwindigkeit - zeitlich in geringem Abstand voneinander angeordnet sein. Beispielsweise kann vorgesehen sein, dass der räumliche Abstand zwischen der ersten Beschichtungsstation 120 und der zweiten Beschichtungsstation 130 (d.h. beispielsweise der Abstand zwischen den Achsen der Rolle 122 und 132) gleich oder kleiner als 10 m, 8 m, 6 m, 5 m oder 4 m ist. Die Zeitdauer zwischen der nassen Aufbringung der ersten Isolierlackschicht 112 in der ersten Beschichtungsstation 120 und der Aufbringung der nassen zweiten Isolierlackschicht 114 in der zweiten Beschichtungsstation 130 kann gleich oder kleiner als 20 s, 15 s, 10 s, 5 s oder 3 s sein. Übliche Bandlaufgeschwindigkeiten können beispielsweise im Bereich von 100 m/min liegen, wobei dieser Wert beispielsweise um ±10%, ± 20%, ±30%, ±40% oder ±50% variieren kann.

Der zweite Isolierlack 134 kann vollflächig oder auch lediglich teilflächig auf die (nasse) erste Isolierlackschicht 112 aufgebracht werden, da die elektrische Isolation durch diese bereits sichergestellt sein kann. Beispielsweise kann eine zweite Isolierlackschicht 114 mit einem Bedeckungsgrad von gleich oder kleiner als 80%, 60%, 40% oder 20% der Fläche der Unterlage (erste Isolierlackschicht 112 beziehungsweise Flachseite des Elektroblechbandes 110) erzeugt werden. Beispielsweise kann die zweite Isolierlackschicht 114 als Streifenmuster aufgetragen werden, bei welchem Lackschichtstreifen mit unbeschichteten Streifenbereichen abwechseln. Die erste Isolierlackschicht 112 wird vorzugsweise vollflächig auf das Elektroblechband 110 aufgebracht, gegebenenfalls ist jedoch auch für diese Schicht ein nur teilflächiger Auftrag möglich, wobei die nicht bedeckten (ausgesparten) Bereiche dann von der zweiten Isolierlackschicht 114 bedeckt sein müssen.

Im Bandlaufweg hinter der zweiten Beschichtungsstation 130 befindet sich der Trockenofen 140. Der zeitliche und räumliche Abstand zwischen der zweiten Beschichtungsstation 130 und dem Eintritt in den Trockenofen 140 kann beispielsweise dieselben Werte aufweisen, die vorstehend für den zeitlichen und räumlichen Abstand zwischen der ersten Beschichtungsstation 120 und der zweiten Beschichtungsstation 130 genannt wurden.

In dem Trockenofen 140 erfolgt eine gemeinsame Trocknung der ersten Isolierlackschicht 112 und der zweiten Isolierlackschicht 114. Der Trockenofen 140 kann hierfür als Durchlauftrockenofen ausgelegt sein, der von dem beschichteten Elektroblechband 110 kontinuierlich durchlaufen wird. Beispielsweise kann die maximale Temperatur des Elektroblechbandes 110 im Trockenofen 140 zwischen 150°C und 280°C betragen, wobei insbesondere Temperaturwerte gleich oder größer als 170°C, 180°C, 190°C, 200°C, 210°C, 220°C oder 230°C und/oder gleich oder kleiner als 250°C, 220°C, 210°C, 200°C oder 190°C vorgesehen sein können. Die Wärmebehandlung in dem Trockenofen 140 kann beispielsweise zwischen 10 s und 40 s betragen und insbesondere kleiner, gleich oder größer als 20 s oder 30 s sein. Andere Temperaturen und Wärmebehandlungszeitdauern sind ebenfalls möglich. Die optimalen Temperaturen und Wärmebehandlungszeitdauern können davon abhängen, welche Materialien für den ersten Isolierlack 124 und für den zweiten, klebefähigen Isolierlack 134 verwendet werden.

Im Trockenofen 140 werden die erste Isolierlackschicht 112 und die zweite Isolierlackschicht 114 beispielsweise jeweils durch Vernetzung zumindest soweit getrocknet, dass diese Schichten im Bandlaufweg ausgangsseitig des Trockenofens 140 mechanisch stabil und abriebfest mit dem Elektroblechband 110 verbunden sind. Dies ermöglicht dann das weitere Handling des getrockneten, beschichteten Elektroblechbandes 150 im Bandlauf hinter dem Trockenofen 140 beispielsweise durch Umlenkrollen oder durch Aufwicklung zu einem Coil (in Figur 1 nicht dargestellt).

Bei dem ersten Isolierlack 124 und dem zweiten Isolierlack 134 handelt es sich um unterschiedliche Lacke bzw. Materialien. Der erste Isolierlack 124 kann eine höhere elektrische Isolationswirkung (Durchschlagsspannung) und/oder eine höhere mechanische Formstabilität im trockenen Schichtzustand aufweisen als der zweite Isolierlack 134. Der klebefähige zweite Isolierlack 134 kann demgegenüber eine höhere Klebefähigkeit oder Klebekraft beim späteren Verklebeprozess (Backprozess) im Elektrokern als der erste Isolierlack 124 aufweisen - wobei letzterer auch ohne Klebefähigkeit im getrockneten Zustand ausgeführt sein kann.

Der erste Isolierlack 124 weist insbesondere hohe elektrische Isolationseigenschaften und hohe Formstabilität und Beständigkeit im späteren Einsatz im Elektrokern auf. Als erster Isolierlack 124 kann beispielsweise ein formaldehydfreier Lack verwendet werden. Es hat sich gezeigt, dass ein formaldehydfreier Lack besonders gut mit dem nachfolgend aufgetragenen klebefähigen zweiten Isolierlack 134 verträglich ist, d.h. dass die Isolationseigenschaften des formaldehydfreien ersten Isolierlacks 124 und/oder die Klebeeigenschaften des zweiten Isolierlacks 134 jeweils wenig oder nicht durch die andere Lackkomponente beeinflusst werden.

Als formaldehydfreier Lack wird dabei ein Lack bezeichnet, der bei der Erwärmung im Elektrokern (d.h. im Betrieb der elektrischen Maschine) kein Formaldehyd freisetzt. Das heißt, die Formaldehydfreiheit bezieht sich nicht allein auf die Inhaltsstoffe des flüssigen Isolierlacks (wiewohl dieser ebenfalls formaldehydfrei ist), sondern auf die im Betrieb der elektrischen Maschine entstehenden Reaktionsprodukte.

Der erste Isolierlack 124 liegt beispielsweise auf Wasserbasis vor, d.h. er weist keine oder nur einen sehr geringen Gehalt an organischen Lösungsmitteln auf. Insofern kann auch die nasse erste Isolierlackschicht 112 in Form eines Wasserlackfilms auf dem Elektroblechband 110 vorliegen.

Bei dem ersten Isolierlack 124 kann es sich beispielsweise um einen C6-Lack handeln. Insbesondere kann beispielsweise der C6-Lack Remisol EB500FF eingesetzt werden. Dabei steht "FF" für formaldehydfrei (d.h. frei von Formaldehyd-Emissionen). Ebenfalls einsetzbar ist beispielsweise ein C5-Lack.

Als zweiter Isolierlack 134 wird ein Lack mit guten Klebeeigenschaften eingesetzt. Der zweite Isolierlack 134 kann ebenfalls auf Wasserbasis vorliegen, so dass die nasse zweite Isolierlackschicht 114 in Form eines weiteren Wasserlackfilms auf die nasse erste Isolierlackschicht 112 aufgetragen wird.

Beispielsweise kann als zweiter Isolierlack 134 ein sogenannter Backlack verwendet werden. Backlack-Schichten sind speziell für den Elektrokernbau entwickelte chemisch aushärtbare, klebefähige Isolierlackschichten mit hoher Formstabilität, Betriebsfestigkeit und hohen Klebekräften. Beispielsweise kann ein sogenannter Backlack-V eingesetzt werden, der hohe Klebekräfte, eine lange Verwendungsdauer aufgrund geringer Alterung, ein verbessertes Langzeitverhalten und eine kurze Backzeit bei vermindertem Druck ermöglicht. Ebenfalls als zweiter Isolierlack 134 einsetzbar ist beispielsweise ein C6-Lack.

Bei dem Elektroblechband 110 kann es sich beispielsweise um das Elektroblechband isovac 800-50A handeln, wobei eine Vielzahl anderer Elektroblechbänder bzw. isovac Erzeugnisse ebenfalls eingesetzt werden können.

Dabei hat sich gezeigt, dass die nasse zweite Isolierlackschicht 114 ohne eine Kontamination der Rolle 132 auf die nasse erste Isolierlackschicht 112 auftragbar ist. Das heißt, trotz des nicht berührungsfreien Auftragens des zweiten Isolierlackes 134 kommt es nicht oder nur in sehr geringem Maße zu einer Verunreinigung der Rolle 132 durch den bereits aufgetragenen ersten Isolierlack 124 der ersten Isolierlackschicht 112. Andernfalls würde die Rolle 132 einen Teil der ersten Isolierlackschicht 112 aufnehmen und nach einer gewissen Zeit keinen weitgehend reinen zweiten Isolierlack 134, sondern ein Gemisch aus erstem Isolierlack 124 und zweitem Isolierlack 134 abgeben. Dies würde die Eigenschaften des Mehrschichtsystems deutlich beeinträchtigen.

Bei der Rollenapplikation kann die Viskosität eines wasserverdünnenden Lacks durch die sogenannte Scherrate eingestellt werden. Wasserverdünnende Lacke sind scherverdünnend, d.h. sie verändern ihre Viskosität in Abhängigkeit von der Scherrate. Bei der Rollenapplikation wird der (wasserverdünnende) Lack geschert, so dass über die Scherrate die Viskosität des aufgetragenen Lackes, d.h. der ersten Isolierlackschicht 112 und der zweiten Isolierlackschicht 114, eingestellt werden kann.

Um eine möglichst schonende Auftragung des zweiten Isolierlacks 134 auf die nasse erste Isolierlackschicht 112 zu ermöglichen, kann die Scherverdünnung des zweiten Isolierlacks 134 bei der Rollenapplikation so klein wie möglich eingestellt werden. Zu diesem Zweck kann die Rolle 132 in der zweiten Beschichtungsstation 130 in Vorwärtsrichtung (d.h. Bandlaufrichtung) gedreht werden, und sie kann gegebenenfalls etwas schneller als die Bandgeschwindigkeit bewegt werden. Dadurch wird eine schonende Aufbringung des zweiten Isolierlacks 134 ermöglicht, wodurch eine Durchmischung der Schichten (nasse erste Isolierlackschicht 112 und nasse zweite Isolierlackschicht 114) weitgehend vermieden werden kann. Je höher die Relativgeschwindigkeit zwischen dem Elektroblechband 110 und der Rolle 132 ist, desto höher ist die Scherung des Lacks beim Auftragen. Sofern der erste Isolierlack 124 ebenfalls durch eine Rollenapplikation aufgetragen wird, kann auch hier über die Relativgeschwindigkeit zwischen der Rolle 122 und dem Elektro blechband 110 die Viskosität der ersten Isolierlackschicht 112 eingestellt werden. Die Viskosität der ersten Isolierlackschicht 112 kann beispielsweise höher als die Viskosität der zweiten Isolierlackschicht 114 eingestellt werden.

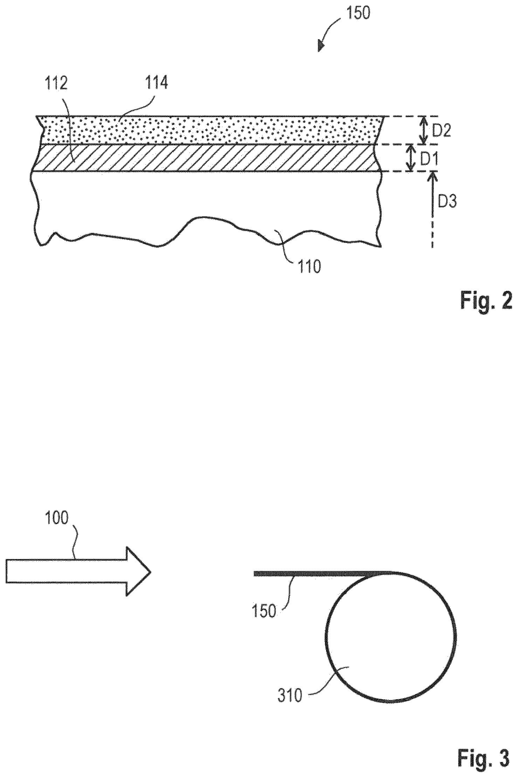

Ein weiterer Aspekt betrifft die Einstellung der Schichtdicken der ersten Isolierlackschicht 112 und der zweiten Isolierlackschicht 114. Figur 2 zeigt in Längsschnittansicht in vereinfachter Darstellung einen oberflächennahen Ausschnitt des beschichteten Elektroblechbandes 110 im Bereich hinter dem Trockenofen 140. Schichtdickenschwankungen und/oder eine minimal vorhandene Mischzone zwischen den Schichten sind nicht dargestellt. Die Querschnittsansicht kann identisch mit der gezeigten Längsschnittansicht sein.

Die (trockene) erste Isolierlackschicht 112 weist eine Dicke D1 auf und die (trockene) zweite Isolierlackschicht 114 weist eine Dicke D2 auf. Die Schichtdicken D1 und/oder D2 können jeweils gleich oder größer als 1 µm und beispielsweise jeweils gleich oder größer oder kleiner als 2 µm, 3 µm, 4 µm, 5 µm, 6 µm, 7 µm, 8 µm, 9 µm, 10 µm, 11 µm oder 12 µm sein. Die Blechdicke D3 des Elektroblechbandes 110 kann beispielsweise gleich oder kleiner als 0,5 mm, 0,4 mm, 0,35 mm oder 0,3 mm sein.

Mikroskopische Untersuchungen von beschichteten Elektroblechbändern 150 haben gezeigt, dass die Schichtdickenschwankungen in der Praxis gering sind und dass eine Schichtgrenze zwischen der (trockenen) ersten Isolierlackschicht 112 und der (trockenen) zweiten Isolierlackschicht 114 mit einer hohen Definiertheit bzw. Schärfe erzielbar (und deutlich sichtbar) ist. Beispielsweise ist eine sehr dünne Grenzflächenmischschicht einer Dicke von weniger als z.B. 10% oder 5% der Schichtdicken D1 oder D2 erreichbar.

Bei der Einstellung der Schichtdicken D1, D2 hat sich gezeigt, dass bei der Nass-in-Nass-Beschichtung die Dicke D2 der zweiten Isolierlackschicht 114 unabhängig davon ist, ob auf die blanke Oberfläche des Elektroblechbandes 110 oder die nasse erste Isolierlackschicht 112 beschichtet wird. Das heißt, es ist möglich zuerst die Schichtdicke D2 der zweiten Isolierlackschicht 114 auf der blanken Blechoberfläche einzustellen und dann die Erstbeschichtung mit der ersten Isolierlackschicht 112 "zuzuschalten".

Figur 3 veranschaulicht ein Coil (Wickel) 310 des beschichteten Elektroblechbandes 150, wie es ausgangsseitig der Bandbeschichtungsanlage 100 hergestellt werden kann. Es wird darauf hingewiesen, dass in der gesamten Bandbeschichtungsanlage 100 keine elastische Verformung des Elektroblechbandes 110 durch Rollenumlenkung und/oder eine Aufwicklung zu erfolgen braucht, d.h. die Beschichtungs- und Trockenprozesse können am linearen Elektroblechband 110 durchgeführt werden, siehe Figur 1. Da die Elektroblechbänder sehr empfindlich gegenüber elastischen Verformungen in Bezug auf ihre magnetischen Eigenschaften sind, wird durch die Vermeidung von Umlenk- und/oder Aufwickelprozessen in der Bandbeschichtungsanlage 100 die Herstellung eines hochqualitativen Elektroblechbandes weiter gefördert.

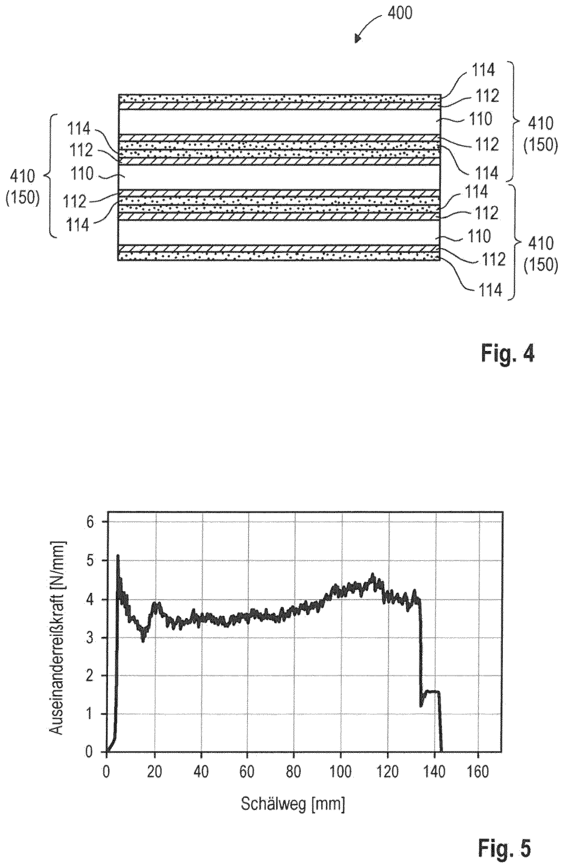

Figur 4 zeigt in schematischer Ansicht einen Ausschnitt aus einem Elektrokern 400, der durch Stapeln von Elektroblechen 410, die durch Querteilung des beschichteten, getrockneten Elektroblechbandes 150 erhalten werden, realisiert ist.

Üblicherweise werden die Elektrobleche 410 vor dem Stapeln durch einen Formzuschnitt in ihre Endform gebracht, beispielsweise durch Stanzen oder Laserschneiden.

Die Elektrobleche 410 werden dann durch Stapeln, das üblicherweise in Handarbeit durchgeführt wird und den kostenintensivsten Aspekt der Fertigung des Elektrokerns 400 darstellt, zu einem den späteren Elektrokern 400 bildenden Blechstapel zusammengefügt.

Anschließend wird der Blechstapel durch Aushärtung der (getrockneten) zweiten Isolierlackschichten 114 verfestigt. Der Verfestigungsmechanismus beruht auf einer chemischen Reaktion, üblicherweise einem dreidimensionalen Vernetzen des Klebstoffes der zweiten Isolierlackschicht 114. Das Aushärten (chemische Vernetzen) des Klebstoffes kann durch eine Verspannung der geschichteten Elektrobleche 410 und einer Erwärmung des Schichtstapels, beispielsweise in einem Ofen, erfolgen.

In dem hier dargestellten Beispiel ist ein Elektrokern 400 dargestellt, der aus einem beidseitig beschichteten Elektroblech 410 hergestellt ist. Wie bereits erwähnt, können auch einseitig beschichtete Elektrobleche 410 oder beidseitig unterschiedlich beschichtete Elektrobleche 410 verwendet werden, wodurch gegebenenfalls höhere Stapelfaktoren erreichbar werden. Allerdings ist bei der einseitigen Beschichtung die Klebekraft geringer und es sind höhere Verklebetemperaturen erforderlich, um den notwendigen Zusammenhalt des Elektrokerns 400 gewährleisten zu können. Bei der beidseitig unterschiedlichen Beschichtung können ebenfalls geringere Klebekräfte und/oder möglicherweise geringere Langzeiteigenschaften in Bezug auf Isolationssicherheiten und/oder Formstabilität auftreten.

Das Schaubild der Figur 5 zeigt, dass die Festigkeit der Klebeverbindung durch die Nass-in-Nass-Aufbringung der zweiten Isolierlackschicht 114 auf die erste Isolierlackschicht 112 nicht beeinträchtigt wird. Dargestellt ist die Auseinanderreißkraft, die benötigt wird, um zwei streifenförmige Elek trobleche 410 nach ihrer Verklebung wieder auseinanderzureißen. Die Auseinanderreißkraft ist dabei über die Breite der Streifen normiert, während der Schälweg die Weglänge beim Auseinanderreißen bezeichnet.

Die Versuche zeigten, dass Auseinanderreißkräfte erforderlich sind, die vergleichbar mit den Auseinanderreißkräften sind, wie sie bei einem Einschichtsystem, d.h. einer reinen zweiten Isolierlackschicht entsprechend der zweiten Isolierlackschicht 114 (ohne darunterliegende erste Isolierlackschicht 112), benötigt werden. Dies bedeutet, dass die Klebekraft der zweiten Isolierlackschicht 114 durch die Nass-in-Nass-Applikation des zweiten Isolierlacks 134 ("Klebstofflack") auf der nassen ersten Isolierlackschicht 112 nicht oder nur in sehr geringem Maße geschwächt wird.

Insofern ist davon auszugehen, dass die Produkteigenschaften des Elektrokerns 400 nach dem Backprozess vergleichbar mit den Produkteigenschaften eines Elektrokerns sind, bei welchem zunächst die erste Isolierlackschicht 112 aufgebracht, getrocknet, dann auf die trockene erste Isolierlackschicht 112 die zweite Isolierlackschicht 114 aufgebracht und wiederum getrocknet wird. Ein solcher Prozess würde jedoch eine zweite Offline-Lackieranlage erforderlich machen und außerdem einen zweiten Anlagendurchlauf durch einen Glühofen erfordern, wodurch ein hoher Zusatzaufwand und hohe Kosten auftreten würden. Darüber hinaus würde das Elektroblechband bei einer Offline-Lackierung durch erforderliche Umlenk- oder Transportprozesse elastisch beansprucht und somit in seiner Qualität beeinträchtigt werden. Diese Nachteile können bei den hier beschriebenen Ausführungsformen vermieden werden.

Es ist davon auszugehen, dass die in Figur 5 anhand eines Versuchs erläuterten Ergebnisse allgemeingültige Aussagen darstellen, die auf sämtliche in dieser Offenbarung beschriebenen Ausführungsformen übertragbar sind.

## Patentansprüche

1. Verfahren zur Herstellung eines lackbeschichteten Elektroblechbandes (110) für den Aufbau von Elektrokernen, umfassend:
nasse Aufbringung einer ersten Isolierlackschicht (112) über zumindest eine Seite eines Elektroblechbandes;
nasse Aufbringung einer zweiten Isolierlackschicht (114) über die nasse erste Isolierlackschicht durch Rollenapplikation, wobei die erste Isolierlackschicht (112) und die zweite Isolierlackschicht (114) aus unterschiedlichen Lacken (124, 134) bestehen; und
Trocknung der ersten Isolierlackschicht (112) und der zweiten Isolierlackschicht (114) in einem Trockenofen (140).

2. Verfahren nach Anspruch 1, wobei die nasse Aufbringung der ersten Isolierlackschicht (112), die nasse Aufbringung der zweiten Isolierlackschicht (114) und die Trocknung der ersten Isolierlackschicht und der zweiten Isolierlackschicht im kontinuierlichen Bandlauf durchgeführt werden.

3. Verfahren nach Anspruch 2, wobei eine Zeitdauer zwischen der nassen Aufbringung der ersten Isolierlackschicht (112) und der nasse Aufbringung der zweiten Isolierlackschicht (114) gleich oder kleiner als 20 s, insbesondere 15 s, 10 s oder 5 s ist.

4. Verfahren nach Anspruch 2 oder 3, wobei eine Zeitdauer zwischen der nassen Aufbringung der zweiten Isolierlackschicht (114) und dem Beginn der Trocknung gleich oder kleiner als 20 s, insbesondere 15 s, 10 s oder 5 s ist.

5. Verfahren nach einem der Ansprüche 2 bis 4, wobei die maximale Blechtemperatur im Trockenofen (140) zwischen 150°C und 280°C, insbesondere zwischen 170°C, 180°C, 190°C oder 200°C als untere Temperaturgrenze und 250°C, 220°C, 210°C oder 200°C als obere Temperaturgrenze beträgt.

6. Verfahren nach einem der vorhergehenden Ansprüche, wobei die zweite Isolierlackschicht (114) eine nach der Trocknung klebefähige Schicht, insbesondere eine Backlack-Schicht ist.

7. Verfahren nach einem der vorhergehenden Ansprüche, wobei die Schichtdicke der ersten Isolierlackschicht (112) nach der Trocknung zwischen 1 und 12 Mikrometern beträgt.

8. Verfahren nach einem der vorhergehenden Ansprüche, wobei die Schichtdicke der zweiten Isolierlackschicht (114) nach der Trocknung zwischen 1 und 12 Mikrometern beträgt.

9. Verfahren nach einem der vorhergehenden Ansprüche, wobei die Viskosität der ersten Isolierlackschicht (112) direkt nach ihrer nassen Aufbringung größer ist als die Viskosität der zweiten Isolierlackschicht (114) direkt nach Ihrer nassen Aufbringung.

10. Verfahren nach einem der vorhergehenden Ansprüche, wobei die nasse Aufbringung der ersten Isolierlackschicht (112) durch Rollenapplikation erfolgt.

11. Verfahren nach einem der vorhergehenden Ansprüche, wobei die Rolle für die nasse Aufbringung der zweiten Isolierlackschicht (114) in Bandlaufrichtung dreht und insbesondere eine Rollengeschwindigkeit höher als die Bandgeschwindigkeit aufweist.

12. Verfahren nach einem der vorhergehenden Ansprüche, wobei der Bedeckungsgrad der zweiten Isolierlackschicht (114) gleich oder kleiner als 80%, 60%, 40% oder 20% der Fläche des Elektroblechbandes (110) ist.

13. Lackbeschichtetes Elektroblechband für den Aufbau von Elektrokernen, das aufweist:
ein Elektroblechband (110); und
eine trockene erste Isolierlackschicht (112) über zumindest einer Seite des Elektroblechbandes (110); **gekennzeichnet durch**
eine trockene zweite Isolierlackschicht (114) über der trockenen ersten Isolierlackschicht, die nass über der noch nassen ersten Isolierlackschicht (112) aufgetragen und dann zusammen mit der nassen ersten Isolierlackschicht (112) getrocknet wurde, wobei die erste Isolierlackschicht (112) und die zweite Isolierlackschicht (114) aus unterschiedlichen Lacken (124, 134) bestehen.

14. Lackbeschichtetes Elektroblechband nach Anspruch 13, wobei die trockene erste Isolierlackschicht (112) eine formaldehydfreie Lackschicht ist.

15. Lackbeschichtetes Elektroblechband nach Anspruch 13 oder 14, wobei die trockene zweite Isolierlackschicht (114) eine klebefähige Schicht, insbesondere eine Epoxidharz-basierte Schicht und/oder eine Backlack-Schicht ist.

## Claims

1. Method for producing a lacquer-coated electric sheet strip (110) for the buildup of electric cores, comprising:
wet application of a first insulation lacquer layer (112) across at least one side of an electric sheet strip;
wet application of a second insulation lacquer layer (114) across the wet first insulation lacquer layer by roll application, where the first insulation lacquer layer (112) and the second insulation lacquer layer (114) consist of different lacquers (124, 134); and
drying of the first insulation lacquer layer (112) and the second insulation lacquer layer (114) in a drying oven (140).

2. Method as claimed in claim 1, wherein the wet application of the first insulation lacquer layer (112), the wet application of the second insulation lacquer layer (114) and the drying of the first insulation lacquer layer and the second insulation lacquer layer are conducted in a continuous strip run.

3. Method as claimed in claim 2, wherein a duration between the wet application of the first insulation lacquer layer (112) and the wet application of the second insulation lacquer layer (114) is equal to or less than 20 s, in particular 15 s, 10 s or 5 s.

4. Method as claimed in claim 2 or 3, wherein a duration between the wet application of the second insulation lacquer layer (114) and the commencement of drying is equal to or less than 20 s, in particular 15 s, 10 s or 5 s.

5. Method as claimed in any of claims 2 to 4, wherein the maximum sheet temperature in the drying oven (140) is between 150°C and 280°C, in particular between 170°C, 180°C, 190°C or 200°C as the lower temperature limit and 250°C, 220°C, 210°C or 200°C as the upper temperature limit.

6. Method as claimed in any of the preceding claims, wherein the second insulation lacquer layer (114) is a layer that is adhesive after drying, in particular a baking lacquer layer.

7. Method as claimed in any of the preceding claims, wherein the layer thickness of the first insulation lacquer layer (112) after drying is between 1 and 12 micrometers.

8. Method as claimed in any of the preceding claims, wherein the layer thickness of the second insulation lacquer layer (114) after drying is between 1 and 12 micrometers.

9. Method as claimed in any of the preceding claims, wherein the viscosity of the first insulation lacquer layer (112) directly after its wet application is greater than the viscosity of the second insulation lacquer layer (114) directly after its wet application.

10. Method as claimed in any of the preceding claims, wherein the wet application of the first insulation lacquer layer (112) is effected by roll application.

11. Method as claimed in any of the preceding claims, wherein the roll for the wet application of the second insulation lacquer layer (114) rotates in strip running direction and, in particular, has a roll speed higher than the strip speed.

12. Method as claimed in any of the preceding claims, wherein the degree of coverage of the second insulation lacquer layer (114) is equal to or less than 80%, 60%, 40% or 20% of the area of the electric sheet strip (110).

13. Lacquer-coated electric sheet strip for the buildup of electric cores, having:
an electric sheet strip (110); and
a dry first insulation lacquer layer (112) across at least one side of the electric sheet strip (110); **characterized by**
a dry second insulation lacquer layer (114) across the dry first insulation lacquer layer, which has been applied wet across the still-wet first insulation lacquer layer (112) and then dried together with the wet first insulation lacquer layer (112), where the first insulation lacquer layer (112) and the second insulation lacquer layer (114) consist of different lacquers (124, 134).

14. Lacquer-coated electric sheet strip as claimed in claim 13, wherein the dry first insulation lacquer layer (112) is a formaldehyde-free lacquer layer.

15. Lacquer-coated electric sheet strip as claimed in claim 13 or 14, wherein the dry second insulation lacquer layer (114) is an adhesive layer, in particular an epoxy resin-based layer and/or a baking lacquer layer.

## Revendications

1. Procédé de production d'une bande de tôle électrique (110) revêtue de vernis et destinée à la construction de noyaux électriques, ledit procédé comprenant :
appliquer par voie humide une première couche de vernis isolant (112) sur au moins un côté d'une bande de tôle électrique ;
appliquer par voie humide une deuxième couche de vernis isolant (114) sur la première couche de vernis isolant humide par application au rouleau, la première couche de vernis isolant (112) et la deuxième couche de vernis isolant (114) comprenant des vernis différents (124, 134) ; et
faire sécher la première couche de vernis isolant (112) et la deuxième couche de vernis isolant (114) dans un four de séchage (140).

2. Procédé selon la revendication 1, l'application par voie humide de la première couche de vernis isolant (112), l'application par voie humide de la deuxième couche de vernis isolant (114) et le séchage de la première couche de vernis isolant et de la deuxième couche de vernis isolant étant effectués dans un déroulement continu de la bande.

3. Procédé selon la revendication 2, la durée entre l'application par voie humide de la première couche de vernis isolant (112) et l'application par voie humide de la deuxième couche de vernis isolant (114) étant inférieure ou égale à 20 s, notamment 15 s, 10 s ou 5 s.

4. Procédé selon la revendication 2 ou 3, la durée entre l'application par voie humide de la deuxième couche de vernis isolant (114) et le début du séchage étant inférieure ou égale à 20 s, notamment 15 s, 10 s ou 5 s.

5. Procédé selon l'une des revendications 2 à 4, la température de tôle maximale dans le four de séchage (140) étant comprise entre 150 °C et 280 °C, notamment entre 170 °C, 180 °C, 190 °C ou 200 °C comme limite de température inférieure et 250 °C, 220 °C, 210 °C ou 200 °C comme limite de température supérieure.

6. Procédé selon l'une des revendications précédentes, la deuxième couche de vernis isolant (114) étant une couche adhésive après séchage, notamment une couche de vernis cuit.

7. Procédé selon l'une des revendications précédentes, l'épaisseur de couche de la première couche de vernis isolant (112) après séchage étant comprise entre 1 et 12 micromètres.

8. Procédé selon l'une des revendications précédentes, l'épaisseur de couche de la deuxième couche de vernis isolant (114) après séchage étant comprise entre 1 et 12 micromètres.

9. Procédé selon l'une des revendications précédentes, la viscosité de la première couche de vernis isolant (112) juste après son application par voie humide étant supérieure à la viscosité de la deuxième couche de vernis isolant (114) juste après son application par voie humide.

10. Procédé selon l'une des revendications précédentes, l'application par voie humide de la première couche de vernis isolant (112) étant effectuée par application au rouleau.

11. Procédé selon l'une des revendications précédentes, le rouleau destiné à l'application par voie humide de la deuxième couche de vernis isolant (114) tournant dans le sens de défilement de la bande et notamment ayant une vitesse supérieure à la vitesse de la bande.

12. Procédé selon l'une des revendications précédentes, le taux de couverture de la deuxième couche de vernis isolant (114) étant inférieur ou égal à 80 %, 60 %, 40 % ou 20 % de la surface de la bande de tôle électrique (110).

13. Bande de tôle électrique revêtue de vernis et destinée à la construction de noyaux électriques, ladite bande comportant :
une bande de tôle électrique (110) ; et
une première couche sèche de vernis isolant (112) sur au moins un côté de la bande de tôle électrique (110) ; **caractérisée par**
une deuxième couche de vernis isolant sèche (114) sur la première couche de vernis isolant sèche qui a été appliquée par voie humide sur la première couche de vernis isolant encore humide (112) puis séchée avec la première couche de vernis isolant humide (112), la première couche de vernis isolant (112) et la deuxième couche de vernis isolant (114) comprenant des vernis différents (124, 134).

14. Bande de tôle électrique revêtue de vernis selon la revendication 13, la première couche de vernis isolant sèche (112) étant une couche de vernis sans formaldéhyde.

15. Bande de tôle électrique revêtue de vernis selon la revendication 13 ou 14, la deuxième couche de vernis isolant sèche (114) étant une couche adhésive, notamment une couche à base de résine époxy et/ou une couche de vernis cuit.
